# EUROPÄISCHE PATENTSCHRIFT

(11) **EP 2 402 389 B1**
(45) Veröffentlichungstag und Bekanntmachung des Hinweises auf die Patenterteilung: **25.11.2015**
(21) Anmeldenummer: 11172446.4
(22) Anmeldetag: 01.07.2011
(51) Int. Cl.: C08J 9/00, C08J 9/14, C08J 9/20, C08J 9/12

(54) **Polystyrol-Hartschaum mit beschichteten aluminiumhaltigen Pigmenten, Verfahren zur Herstellung des Polystyrol-Hartschaumes und Verwendung desselben**
Polystyrene rigid foam with coated aluminium-containing pigments, process for producing it and its use.
Mousse rigide de polystyrène comprenant des pigments revêtus contenant de l'aluminium , procédé pour sa préparation et son utilisation.

(30) Priorität: 02.07.2010 DE 102010025927
(43) Veröffentlichungstag der Anmeldung: 04.01.2012
(73) Patentinhaber: Eckart GmbH, 91235 Hartenstein (DE); Saint-Gobain Rigips GmbH, 40549 Düsseldorf (DE)
(72) Erfinder: Nguyen, Phu Qui, 41238 Mönchengladbach (DE); Greb, Marco, 90489 Nürnberg (DE); Manara, Jochen, 97074 Würzburg (DE); Arduini-Schuster, Mariacarla, 97273 Kürnach (DE); Rydzek, Matthias, 97688 Bad Kissingen (DE); Ebert, Hans-Peter, 97337 Dettelbach (DE); Grimm, Christian, 33442 Herzebrock-Clarholz (DE)
(74) Vertreter: Walcher, Armin

(56) Entgegenhaltungen:
- EP-A2- 1 142 942
- WO-A1-2008/074764
- US-A- 4 529 741

## Beschreibung

Die Erfindung betrifft einen Polystyrol-Hartschaum mit infrarotreflektierenden, nicht-plättchenförmigen beschichteten Pigmenten, die einen Aluminiumanteil von wenigstens 30 Gew.-%, bezogen auf das Gesamtgewicht der nicht-plättchenförmigen Pigmente, aufweisen. Die Erfindung betrifft ferner ein Verfahren zur Herstellung dieses Polystyrol-Hartschaums als auch dessen Verwendung.

Die wärmeschutztechnischen Anforderungen in Neubauten und auch an Gebäuden im Bestand steigen mit der Einführung immer neuer Wärmeschutzverordnungen beständig. Gleichzeitig steigen aus wirtschaftlichen, bautechnischen und ökologischen Gründen auch die Anforderungen an die Langlebigkeit und Zuverlässigkeit von Baukonstruktionen. Neben der Verringerung des Energieeinsatzes ist in steigendem Maße auch die Verringerung des Materialeinsatzes bei der Herstellung von Wärmeisolationsmaterialien von Bedeutung. Es ist bekannt, wärmeisolierende Polystyrol-Hartschaumplatten zur Wärme- und zur Schallisolierung, vorzugsweise auf Außenwänden von Gebäuden, aufzubringen und dann die Außenfläche mit einer Putzschicht oder einer anderen wetterfesten und optisch ansprechenden Verkleidung zu versehen. Wärmedämmstoffe aus Polystyrol-Hartschaum bestehen aus einem porösen Festkörpergerüst mit einer sehr geringen Wärmeleitung über die Festkörperstruktur. Die über das in dem Polystyrol-Hartschaum enthaltende Gas erfolgende Wärmeleitung trägt im Falle von Luft bei Raumtemperatur mit 0,026 W/mK maßgeblich zur Gesamtwärmeleitfähigkeit des Polystyrol-Hartschaums bei. Der nicht an einen Stoff gebundene Transport in Form von Wärmestrahlung wird durch die Struktur, Dichte und die chemischen Bestandteile des Dämmmaterials bestimmt, indem Absorptions- und Streuprozesse den Infrarotstrahfungstransport durch das Wärmeisolationsmaterial behindern. Zur Reduktion der Festkörperwärmefeitfähigkeit sollte die Dichte des Dämmstoffs möglichst gering sein. Ein Vakuum wäre im Hinblick auf die Wärmeisolation ideal. Eine geringere Dichte eines Wärmeisolationsmaterials führt darüber hinaus zu einer Materialeinsparung, wodurch wertvolle Rohstoffe geschont werden. Auf der anderen Seite erhöht sich aufgrund der reduzierten Dichte die Strahlungswärmeleitfähigkeit durch den im Wärmeisolationsmaterial erhöhten Gasanteil signifikant. Um diese Erhöhung der Strahlungswärmeleitfähigkeit zu vermindern, können Infrarot-Trübungsmittel eingesetzt werden. Diese Trübungsmittel haben die Aufgabe, Wärmestrahlung effizient zu absorbieren und/oder zu reflektieren und/oder zu streuen und somit die Strahlungsextinktion im infraroten (IR) Wellenlängenspektrum (nahes IR und IR in einem Wellenlängenbereich von ca. 0,75 bis 25 µm) zu erhöhen, um damit die Strahlungswärmeleitfähigkeit zu reduzieren. Derartige Trübungsmittel werden auch als athermane Materialien bezeichnet. Beispiele solcher Infrarot-Trübungsmittel sind Titandioxid, Industrieruße oder Graphite.

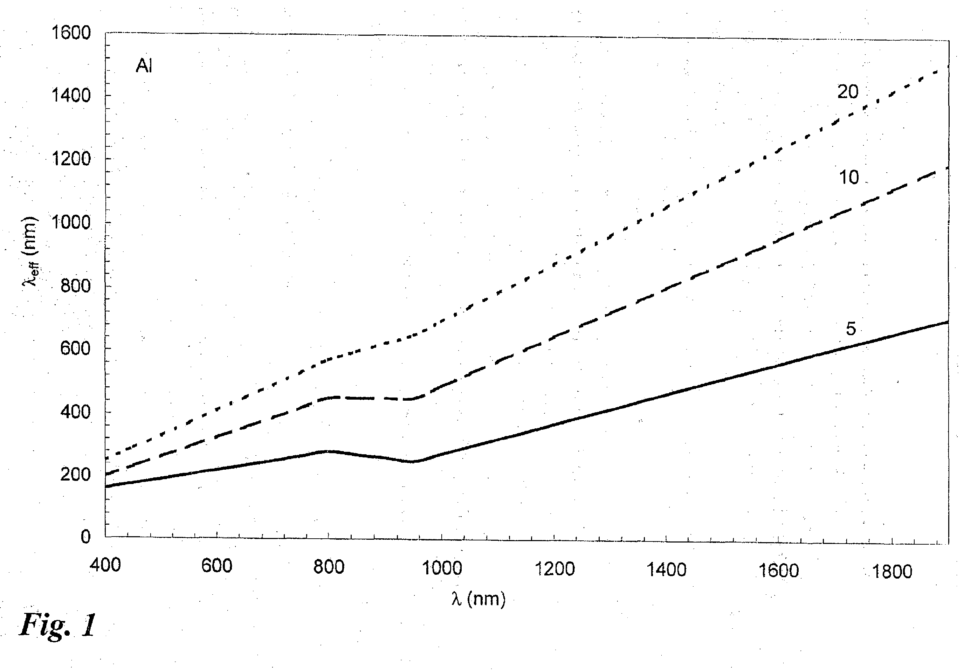

Infrarotstrahlung ist zu beschreiben als eine elektromagnetische Welle bestehend aus elektrischen und magnetischen Feldern, die sich im Raum ausbreiten. Die Erzeugung der elektromagnetischen Wellen kann mit einem elektrischen oder einem magnetischen Wechselfeld erfolgen; die sich ausbreitende Welle besteht immer aus einer Kombination von beiden. Eine exakte physikalisch mathematische Beschreibung liefern die Maxwell-Gleichungen bei vorgegebenen Randbedingungen. In der Praxis berechnet man die Abstrahlung sowie die Absorption der Energie oft durch Näherungsverfahren. Eines dieser Näherungsverfahren geht von einer Dipolantenne aus. Diese wird im Modell gebildet aus einem Schwingkreis bestehend aus einem Plattenkondensator und einer Spule. Werden die Kondensatorplatten je um ± 90° nach außen gedreht und zu einem Leiter geformt und übernimmt die Leitungsinduktivität die Funktion der Spule, so ergibt sich eine Dipolantenne in Form einer zylinderförmigen Draht-Antenne. Für eine solche Dipolantenne gilt im Radiofrequenzwellenlängenbereich, dass im Resonanzfall zwischen der Länge I des Dipols und der Resonanzwellenlänge in etwa der Zusammenhang I = λ/2 besteht. Im Gegensatz dazu ergibt sich gemäß Phys. Ref. Let. 98, (2007) "Effective Wavelength Scaling for Optical Antennas", Lukas Novotny, für optische Wellenlängen die Länge der Dipolantenne aus Aluminium kleiner als λ/4, was darin begründet ist, dass in den allgemeinen Zusammenhang I = λ/2 für Aluminum näherungsweise ein λ_{effektiv} von in etwa λ/2 einzusetzen ist (also I = λ_{eff}/2 ≈< λ/4, vgl. Fig. 1). Das heißt, für einen optischen Wellenlängenbereich von 0,75 µm bis 25 µm resultiert eine optimale Länge der Dipolantenne von etwa 200 nm bis 6 µm.

Im Fall von sphärischen Pigmenten ist es bekannt, dass eine optimale Teilchengröße für eine maximale Absorption von Infrarotstrahlung existiert, welche entsprechend der Mie Streutheorie berechnet werden kann. Beispielsweise bedeutet für Polyesterfasern mit einem für eine maximale Extinktion optimalen Durchmesser von etwa 5 µm, dass für Polyesterfasern mit einem kleinerem Durchmesser die Absorption der IR-Strahlung stark abnimmt. Metallfasern oder metallbeschichtete dielektrische Fasern zeigen jedoch ein davon völlig unterschiedliches Verhalten. Wegen ihrer elektrischen Leitfähigkeit wirken diese Fasern wie kleine Antennen, die die IR-Strahlung streuen und absorbieren (für die Infrarotstrahlung wird für diesen Effekt im Folgenden "infrarotreflektierend" verwendet), selbst wenn der Faserdurchmesser wesentlich kleiner ist als die Wellenlängen der elektromagnetischen Strahlung. Für sehr dünne metallisierte Glasfasern mit einem Faserdurchmesser im Bereich von 0,1 µm konnten spezifische Extinktionswerte E > 1400 m²/kg gemessen werden.

Aus "International Journal for Heat and Mass Transfer", Vol. 36, Nr. 11, Seite 2789 bis 2794 aus 1993 ist zu entnehmen, dass der spezifische Extinktionskoeffizient von aluminiumbeschichteten Polypropylenfasern im Gegensatz zu unbeschichteten Polyester- und Polypropylenfasern auch für Faserdurchmesser < 5 µm zunimmt.

Dämmstoffe mit Wärmeleitfähigkeiten unter 0,03 W/mK sind beispielsweise Vakuumisolationspaneele mit einer Wärmeleitfähigkeit λ von ca. 0,005 W/mK oder schwergasgeschäumtes Polyurethan mit λ ≈ 0,025 W/mK.

Seit einiger Zeit wird angestrebt, mit einem möglichst geringen Polystyroleinsatz bei der Herstellung von Wärmedämmelementen ein möglichst optimales Wärmeisolationsvermögen zu erzielen. Dies hat dazu geführt, dass auch Polystyrolhartschaum mit einer Dichte unterhalb von 20 kg/m³ bei der Herstellung von Wärmedämmelementen in Betracht gezogen wird. Ein Polystyrolhartschaum mit so geringer Dichte besitzt jedoch eine vergleichsweise hohe Wärmeleitfähigkeit von mehr als 40 mW/mK.

In der EP 0 620 246 B1 wird daher vorgeschlagen, in den Polystyrolpartikelschaum ein infrarotabsorbierendes Material einzubringen. Das infrarotabsorbierende Material kann auf die Oberfläche der Polystyrolschaumperlen angelagert werden, indem diese von außen beschichtet oder benetzt werden. Erst anschließend an diese Beschichtung findet eine Verschweißung der mit dem infrarotabsorbierenden Material versehenen und vorgeschäumten Polystyrolschaumperlen zum Polystyrolhartschaumformkörper statt. Das infrarotabsorbierende Material kann auch schon dem ungeschäumten Polystyrol zugeführt werden. Versuche haben gezeigt, dass ein Anteil von 0,5 bis 5 Gew.-% infrarotabsorbierendem Material, bezogen auf das Gewicht des fertigen Formkörpers, zu der gewünschten Absorption von IR-Strahlung führt. Als infrarotabsorbierende Materialien können Metalloxide, beispielsweise Fe₂O₃ oder Al₂O₃, Nichtmetalloxide, wie zum Beispiel SiO₂, Metallpulver, Aluminiumpulver, Kohlenstoff oder organische Farbstoffe verwendet werden.

Die DE 44 06 613 C2 offenbart in diesem Zusammenhang ein Verfahren zur Herstellung eines Polymerschaumstoffes, bei dem den schaumstoffbildenden Komponenten infrarotreflektierende Pigmente, die gegebenenfalls beschichtet sind, zugesetzt werden. Zur Erhöhung der Reflexionswirkung des wärmeisolierenden Polymerschaumstoffs wird daher vorgeschlagen, dem Polymerschaumstoff 2 bis 4 Gew.% infrarotreflektierende Pigmente aus Rutil beschichtetem Mikroglimmer zuzusetzen. Diese Pigmente wirken vergleichsweise wie Spiegel für die Infrarotstrahlung und bewirken, dass die von dem zu isolierenden Gegenstand ausgehenden Wärmestrahlen wenigstens teilweise reflektiert werden, so dass die Wärmeleitfähigkeit λ sinkt. Da die Pigmente wie Spiegel wirken und die Infrarotstrahlen reflektieren, müssen die Glimmerpartikel in etwa der Größe der Wellenlänge der Infrarotstrahlung, also zwischen ca. 0,75 bis 25 µm aufweisen.

Einen Hartschaum mit eingearbeiteten, reflektierenden Metallpigmenten, beispielsweise Aluminium, beschreibt die DE 33 19 446 C2. Der vorgeschlagene Hartschaum soll insbesondere eine, beispielsweise hinter einem Heizkörper angeordnete, aluminiumbeschichtete Dreischichtfolie ersetzen. Insbesondere kann auf diese Art und Weise die Wärmeisolation insbesondere zur Anbringung hinter Heizkörpern kostengünstiger hergestellt werden und durch das Einbringen verschiedener Metalle unterschiedliche Farbtöne erzeugt werden.

Aus der DE 196 05 266 A1 ist ein elastischer Polyolefinweichschaumstoff mit IR-reffektierenden Pigmenten bekannt. Durch seine Elastizität eignet sich der Polyolefinweichschaumstoff insbesondere für schwierige Einbausituationen, zur Herstellung von Rohrdämmungen oder zur Herstellung beliebiger Formkörper durch thermische Verformung, ohne dass Brüche auftreten oder der Schaumstoff kollabiert. Bevorzugt bestehen die Pigmente zur Reflexion von Infrarotstrahlungen in dem Bereich der Wärmestrahlung aus Metallpigmenten und speziell aus Aluminiumpigmenten einer Teilchengröße von 1 bis 100 µm. Diese bevorzugten plättchenförmigen Pigmente müssen, um die Wärmeleitfähigkeit wirksam zu erniedrigen, eine ausreichend große reflektierende Fläche aufweisen. Gemäß den Beispielen der DE 196 05 266 A1 muss der Anteil der IR-reflektierenden Pigmente größer als 3 Gew.-%, bezogen auf das Gewicht des Schaumstoffs betragen.

Aus der EP 1 159 338 B1 sind teilchenförmige, expandierbare Styrolpolymerisate (EPS) bekannt, die zu Hartschaumstoffen mit feiner Zellstruktur und geringer Dichte verarbeitbar sind und die für die Herstellung zumindest ein Treibmittel enthalten und zur Verbesserung ihrer Wärmedämmeigenschaften zumindest Aluminium in Teilchenform aufweisen. Die Aluminiumteilchen sind in homogener Verteilung als infrarotreflektierendes Material eingearbeitet, wobei der Hauptteil der Aluminiumteilchen als Plättchen vorliegt, deren größte Abmessung zwischen 1 und 15 µm liegt. Die Plättchenform der Aluminiumteilchen bewirkt eine größere Oberfläche im Vergleich zur Kugelform und kann dadurch die Infrarotstrahlung stark reflektieren. Eine gute IR-Strahlenreflexion wird erhalten, wenn der Durchmesser der Plättchen zumindest das 10-fache der mittleren Dicke, d.h. das Aspektverhältnis Durchmesser/Dicke > 10/1, der Plättchen beträgt. Der Gewichtsanteil der Aluminiumteilchen bezogen auf das Gewicht des Polymers liegt unter 6 Gew.-%. Die plättchenförmigen Aluminiumpigmente werden durch einen zusätzlichen Vermahlungsschritt von Aluminiumgriess erhalten.

Eine weitere Anwendung von Aluminiumpigmenten als IR-reflektierende Pigmente offenbart die DE 10 2005 061 684 A1 in Form der Verwendung der IR-reflektierenden Pigmente in Wandfarben. Um im Hinblick auf das metallische Aussehen der Aluminiumpigmente in der Wandfarbe eine unerwünschte Vergrauung der Farbe zu vermeiden, sind diese Aluminiumpigmente vorzugsweise weiß eingefärbt. Gemäß der DE 10 2005 061 684 A1 sind die Metalleffektpigmente daher mit einer, für Infrarotstrahlung im Wesentlichen durchlässigen, weißen Beschichtung versehen. Diese Beschichtung umfasst oder besteht vorzugsweise aus Metalloxiden und/oder organischen Polymeren. Gemäß der technischen Lehre der DE 10 2005 061 684 A1 besitzen derartige Pigmente im optischen Bereich von 400 bis 800 nm den höchsten Streuquerschnitt für elektromagnetische Wellen. Sowohl kleinere wie auch größere Weißpigmente haben weit geringere Streueigenschaften. Am geringsten streuen Nanopartikel mit einer Primärkorngröße kleiner als 30 nm, die praktisch vollständig transparent sind.

Aufgrund ihrer hohen IR-Reflexion sind insbesondere Metallpigmente geeignet, den von dem zu isolierenden Gegenstand abgegebenen IR-Strahlungsanteil durch Reflexion zu verringern. Trotzdem haben sich Metallpigmente bislang am Markt nicht gegenüber anderen athermanen Stoffen wie beispielsweise Graphit durchsetzen können.

Der Grund hierfür liegt unter anderem darin, dass Hartschaumplatten zur Wärmedämmung häufig im Kontakt zu Putzen, d.h. sehr stark alkalischen Oberflächen stehen. Die Alkalien können dann aus den Putzen zum Teil in die Hartschaumplatte diffundieren und die Metallpigmente zumindest teilweise durch Korrosion zerstören. Damit geht ein entsprechender Verlust des IR-Strahlung-Reflexionsvermögens einher.

Ein weiterer Grund, weswegen sich Aluminiumpigmente als Zusatz bei Wärmeisolationselementen bislang nicht durchgesetzt haben, liegt darin, dass Aluminiumpigmente bei der Einarbeitung in die Hartschaumplatte Wasserdampf ausgesetzt sind. Unter diesen stark korrosiven Bedingungen wird zumindest ein Teil der Aluminiumpartikel oxidiert, wodurch das IR-Strahlung-Reflexionsvermögen stark beeinträchtigt wird. Zudem ist diese Oxidation sicherheitstechnisch bedenklich, da dabei Wasserstoff entsteht und die Oxidation von Aluminium mit einer sehr starken Exothermie verbunden ist.

Die WO 2008/074764 A1 betrifft expandierbare Styrolpolymerisate und Schaumstoffe mit verringerter Wasseraufnahme.

Die EP 1 142 942 A2 betrifft ein Verfahren zur Herstellung Aluminiumpulver enthaltender expandierbarer Styrolpolymerisate.

Die US 4,529,741 betrifft eine schäumbare Polyorganosiloxanzusammensetzung.

Eine Aufgabe der Erfindung ist es daher, einen Polystyrol-Hartschaum mit verbessertem, d.h. kleinem, Wärmeleitfähigkeitswert λ, insbesondere mit einem Wärmeleitfähigkeitswert λ < 0,03 W/mK, bereitzustellen.

Eine weitere Aufgabe besteht darin, einen Polystyrol-Hartschaum bereitzustellen, der eine verringerte Strahlungswärmeleitfähigkeit aufweist.

Diese Aufgabe wird durch Bereitstellung eines Polystyrol-Hartschaums gemäß Anspruch 1 gelöst.

Bevorzugte Weiterbildungen des Polystyrol-Hartschaumes sind in den Unteransprüchen 2 bis 5 angegeben.

Die nicht-plättchenförmige Pigmente weisen einen Anteil an Aluminium von mindestens 30 Gew.-%, bevorzugt von mindestens 50 Gew.-% und besonders bevorzugt von mindestens 80 Gew.-%, jeweils bezogen auf das Gesamtgewicht des Pigments, auf.

Aufgrund des hohen Anteils an Aluminium wird eine starke Absorption und Reflexion von IR-Strahlung erreicht. Aluminium ist in massiver Form ein sehr stark IR-Strahlung reflektierendes Metall. Aluminium besitzt freie Elektronen und kann daher gemäß der Drudetheorie IR-Strahlung besonders gut absorbieren, was sich in einer hohen Reflexion äußert. Im Gegensatz zu dem ebenfalls starken IR-Reflektor Silber ist es jedoch wesentlich kostengünstiger herzustellen.

Das Aluminiummetall kann andere Metalle in Mengen bis zu 50 Gew.-%, bevorzugt bis zu 10 Gew.-%, weiter bevorzugt bis zu 2 Gew.-% und besonders bevorzugt bis zu 1 Gew.-%, jeweils bezogen auf das Gesamtgewicht des Metallanteils der nicht-plättchenförmigen Pigmente, aufweisen. Diese anderen Metalle können als Verunreinigungen des Aluminiums und/oder als Legierungskomponenten vorliegen.

Die nicht-plättchenförmigen Aluminiumpigmente weisen einen mittleren Durchmesser aus einem Bereich von 30 nm bis 75 µm und bevorzugt 35 nm bis 35 µm und besonders bevorzugt 40 nm bis 6 µm auf.

Weiterhin bevorzugt sind nicht-plättchenförmige Aluminiumpigmente mit einer mittleren Größe von über 1 bis 6 µm und besonders bevorzugt von 2 bis 5 µm. Derartige Pigmente sind leicht beispielsweise mittels des bekannten Verdüsungsverfahrens (atomizing) und ggf. nachfolgender Klassierung herzustellen.

Die Erfinder haben weiterhin überraschend festgestellt, dass auch Pigmente mit einem mittleren Durchmesser aus einem Bereich von 30 nm bis unter 1 µm, also im Wesentlichen unterhalb der Wellenlänge der IR-Strahlung (nahes IR und IR liegt in einem Wellenlängenbereich von ca. 0,75 bis 25 µm) sehr geeignet sind, da diese eine starke IR-Absorption/Reflexion haben.

Derartige Nano-Aluminiumteilchen können beispielsweise nach den in der WO 2004/112997, der WO 2007/024067 A1 oder der EP 0718061 A1 offenbarten Verfahren durch Explosion von Aluminiumdrähten hergestellt werden.

Bevorzugt weisen die Nano-Aluminiumteilchen einem mittleren Durchmesser aus einem Bereich von 40 bis 600 nm und besonders bevorzugt 50 bis 150 nm auf.

Die oben genannte Veröffentlichung "International Journal for Heat and Mass Transfer", Vol. 36, Nr. 11, Seite 2789 bis 2794 aus 1993 lehrt, dass die Verwendung von Nanofasern als Nanoantennen zum Zeitpunkt der Publikation noch keinen praktischen Nutzen habe und auch noch keine technische Lösung für die Produktion eines Wärmeisolationssystems mit solch dünnen Fasern bekannt sei. Mit den nunmehr vorliegenden nicht-plättchenförmigen Pigmenten konnte der bekannte Polystyrol-Hartschaum als Wärmeisolationsmaterial signifikant verbessert werden.

Die optimale Länge von zylindrischen Dipolantennen ist für optische Wellenlängen, auch optische Nanoantennen oder vereinfacht Nanoantennen genannt, kleiner als λ/4, wobei gemäß Fig. 1 λ_{effektiv} in etwa λ/2 ist. Das heißt, für einen Wellenlängenbereich von 0,75 µm bis 25 µm wäre die optimale Länge der Dipolantenne für optische Wellenlängen in etwa 200 nm bis 6 µm. Somit wäre das Aspektverhältnis der Dipolantenne, definiert als Länge (Höhe)-zu-Durchmesser-Verhältnis der Dipolantenne, für eine optische Wellenlänge von 800 nm und einen Dipoldurchmesser von 30 nm dann 200 : 30 nm ≈ 6:1. Bei einer optischen Wellenlänge von 20 µm und einem Dipoldurchmesser von 250 nm ergäbe sich ein Aspektverhältnis der Dipolantenne von (20/4) µm : 0,25 µm, d.h. ein Verhältnis 20:1, mit einem Dipoldurchmesser von 500 µm bei dieser Wellenlänge ein Aspektverhältnis von 10:1. Für einen Dipoldurchmesser von ca. 3 µm und einer Dipollänge (Höhe) von ca. 6 µm liegt das Aspektverhältnis der zylindrischen Aluminiumhaltigen Pigmente bei ≈ 2:1. Bei einer weiteren Ausführungsform der Erfindung liegt das Aspektverhältnis der zylindrischen Aluminiumhaltigen Pigmente vorzugsweise zwischen 6:1 und 2:1.

Fig. 1 zeigt eine Darstellung der effektiven Wellenlänge für Metallzylinder aus Aluminium Phys. Ref. Let. 98, (2007) "Effective Wavelength Scaling for Optical Antennas", Lukas Novotny. Dargestellt sind die effektiven Wellenlängen bei drei Aspektverhältnissen der Metallzylinder von 5:1, 10:1 und 20:1, die in der Veröffentlichung verkürzt mit den Zahlen 5, 10 und 20 bezeichnet sind.

Bei den nicht-plättchenförmigen Pigmenten mit einem Aluminiumanteil von wenigstens 30 Gew.-%, bezogen auf das Gesamtgewicht der nicht-plättchenförmigen Pigmente, handelt es sich vorzugsweise um nicht-plättchenförmige Metallpigmente. Äußerst vorteilhaft sind die nicht-plättchenförmigen Metallpigmente kostengünstig herzustellen. Plättchenförmige Metalleffektpigmente müssen stets durch einen zusätzlichen Vermahlungsschritt hergestellt werden, der hier eingespart werden kann. Nano-Aluminiumteilchen, die nach der Methode durch Explosion von Aluminiumdrähten hergestellt werden, fallen ebenfalls nicht plättchenförmig an. Die erfindungsgemäß vorzugsweise zu verwendenden Metallpigmente mit einem Aluminiumanteil von wenigstens 30 Gew.-% können eine runde, ellipsoide, unregelmäßige (spratzige), zylinderförmige, nadelförmige, stäbchenförmige oder kegelförmige Form annehmen.

Als nicht-plättchenförmige Metallpigmente mit einem Aluminiumanteil von wenigstens 30 Gew.-% werden in dieser Erfindung auch Metallpigmente mit einer plättchenförmigen Struktur, die einen Formfaktor (Verhältnis der mittleren Dicke zum mittleren Durchmesser des Plättchens) unterhalb von 10:1 1 und bevorzugt unterhalb 3:1 verstanden.

Hierbei wird der mittlere Durchmesser mittels Lasergranulometrie ermittelt. Mit Hilfe dieser Methode kann die Größenverteilung einer dispersen Probe anhand ihrer Lichtbeugung gemäß Fraunhofer Theorie ermittelt werden. Die Pigmente liegen dabei als Dispersion in einem organischem Lösemittel wie beispielsweise Isopropanol, vor. Die Durchmesser werden berechnet als volumengemitteilte Radien einer Äquivalentkugel. Als mittlerer Durchmesser wird der d₅₀-Wert herangezogen, d.h. der Größenwert unterhalb dessen 50% der Teilchen vorliegen. Als Lasergranulometer wird bevorzugt ein Cilas-Gerät 1064 der Fa. Cilas, Frankreich verwendet.

Die mittlere Höhe wird bevorzugt durch Auszählung der Probe in einem REM-Gerät bestimmt. Dabei sollten mindestens 50, bevorzugt ca. 100 Teilchen gezählt werden.

Für Nano- Aluminiumteilchen wird zur Größenbestimmung die Transmissionselektronenmikroskopie (TEM) oder ggf. Laserstreuungsmethoden herangezogen.

Metallpigmente mit im Wesentlichen zylinderförmigen, nadelförmigen oder stäbchenförmigen Geometrien zeichnen sich vorzugsweise durch ein mittleres Verhältnis von Länge (Höhe) zu Durchmesser (Aspektverhältnis) von 2:1 bis 1000:1 aus. Diese Größen werden ebenfalls durch Auszählung der Probe in einem REM-Gerät bestimmt. Dabei sollten mindestens 50, bevorzugt ca. 100 Teilchen gezählt werden. Besonders bevorzugt sind erfindungsgemäß beschichtete Metallpigmente mit einer im Wesentlichen zylinderförmigen Geometrie.

Besonders bevorzugte Aspektverhältnisse für die im Wesentlichen zylinderförmigen Metallpigmente mit einem Aluminiumanteil von wenigstens 30 Gew.-% liegen in einem Bereich von 3:1 bis 100:1 und besonders bevorzugt von 4:1 bis 10:1.

Zur wirtschaftlichen Herstellung der Polystyrol-Hartschäume ist es vorteilhaft, den Anteil der kostenintensiven, beschichteten nicht-plättchenförmigen Metallpigmente möglichst gering zu halten. Bei der Erfindung liegt daher der Anteil der beschichteten nicht-plättchenförmigen Metallpigmente mit einem Aluminiumanteil von wenigstens 30 Gew.-% in einem Bereich von 0,1 bis 10 Gew.-%, bevorzugt von 0,3 bis 5 Gew.-% und besonders bevorzugt von 0,5 bis 2 Gew.-%, jeweils bezogen auf das Gesamtgewicht des aufgeschäumten Polystyrol-Hartschaumes.

Gemäß einer bevorzugten Ausführungsform enthält der Polystyrol-Hartschaum neben den nicht-plättchenförmigen Pigmenten mit einem Aluminiumanteil von wenigstens 30 Gew.-% ein oder mehrere weitere IR-reflektierende Pigmente.

Um die Wirksamkeit des geringen Gewichtsanteils an Pigmenten mit einem Aluminiumanteil von wenigstens 30 Gew.-% zu erhalten, ist es nötig, die IR-reflektierenden Eigenschaften der Pigmente durch eine korrosionshemmende Beschichtung zu schützen.

Die erfindungsgemäßen Polystyrol-Hartschäume können nach einem Extrusionsverfahren als extrudierter Polystyrol Hartschaum (XPS) oder nach einem Expansionsverfahren als expandierter Polystyrol Hartschaum (EPS) hergestellt werden, die unabhängige Ausführungsformen darstellen.

Der erfindungsgemäße Polystyrol-Hartschaum muss nicht als Polystyrolkomponente reines Polystyrol enthalten. Im Sinne der vorliegenden Erfindung werden unter Polystyrol auch Polystyrolcopolymer(e) verstanden. Polystyrolcopolymer werden durch Polymerisation von Styrolmonomer(en) und Styrolcomonomer(en) erhalten. Das Polystyrol kann mithin Polystyrol, Polystyrolcopolymer oder eine Mischung aus Polystyrol und Polystyrolcopolymer sein.

Die für die Baupraxis wesentlichen Unterschiede zwischen XPS und EPS sind die höhere Druckfestigkeit und geringere Wasseraufnahme des XPS im Vergleich zum EPS. Hinsichtlich der Anforderung, dass durch Korrosion das IR-Reflexionsvermögen der Pigmente nicht beeinträchtigt werden soll, unterscheiden sich EPS und XPS nicht. Bei diesen beiden Verfahren unterscheiden sich die Mechanismen der Korrosion der Pigmente und der damit einhergehende Verlust an Reflexionsvermögen der Pigmente nicht.

Bei einer weiteren bevorzugten Ausführungsform weisen die nicht-plättchenförmigen Pigmente mit einem Aluminiumanteil von wenigstens 30 Gew.-% ein Trägermaterial, z.B. aus Graphit, Titanoxid, Mikroglasfasern oder Nanotubes, auf, welches mit einer Aluminiumbeschichtung versehen ist. Die Pigmente wirken dabei für die Infrarotstrahlung als Antennen und weisen daher eine elektrische Leitfähigkeit auf.

Da der Polystyrol-Hartschaum bevorzugt großflächig, beispielsweise für Fassaden, Dächer oder Böden als Dämmmaterial, üblicherweise in Plattenform, genutzt wird, werden bevorzugt Pigmentmaterialien mit geringem Gewicht eingesetzt, wie z.B. mit Aluminium beschichteter Graphit. Um die Antennenwirkung und damit die nötigen IR-reflektierenden Eigenschaften nicht durch Korrosion zu verlieren, sind die Pigmente mit einer korrosionshemmenden Beschichtung versehen, die die Korrosionsanfälligkeit der Metalloberfläche, insbesondere gegenüber Wasser und/oder Alkalien, verringert.

Erfindungsgemäß enthält die korrosionshemmende Beschichtung Verbindungen, die aus der Gruppe, die aus Siliziumoxid, vorzugsweise SiO₂, Siliziumoxidhydrat(en), Siliziumhydroxid, Chromatierschichten und Mischungen davon besteht, ausgewählt werden. Vorzugsweise besteht die korrosionshemmende Beschichtung aus einer oder mehreren der Verbindungen, die in der vorstehenden Gruppe angegeben sind.

Gemäß einer äußerst bevorzugten Ausführungsform enthält die korrosionshemmende Beschichtung Verbindungen, die aus der Gruppe, die aus Siliziumoxid, vorzugsweise SiO₂, Siliziumoxidhydrat(en), Siliziumhydroxid und Mischungen davon besteht, ausgewählt werden. Vorzugsweise besteht die korrosionshemmende Beschichtung aus einer oder mehreren der Verbindungen, die in der vorstehenden Gruppe angegeben sind.

Die Siliziumoxidschichten, vorzugsweise SiO₂-Schichten, werden bevorzugt durch Sol-Gel-Verfahren gebildet. Hierbei werden Tetraalkoxysilane in alkoholischen Lösungen mit Wasser unter sauerer und/oder basischer Katalyse umgesetzt.

Bei allen diesen Schichten handelt es sich um auf molekularer Ebene dreidimensional miteinander vernetzte Schichten, die besonders dichte Schichten ergeben und damit einen besonders wirksamen Korrosionsschutz bieten.

Die Schichtdicke wird so gewählt, dass die Korrosionsanfälligkeit des Aluminium enthaltenden Pigments effektiv verringert wird. Je nach Pigmentmaterial liegt die mittlere Schichtdicke der korrosionshemmenden Beschichtung in einem Bereich von 2 nm bis 100 nm, bevorzugt von 5 bis 80 nm und besonders bevorzugt von 10 nm bis 50 nm.

Besteht die korrosionshemmende Beschichtung aus SiO₂, Siliziumoxidhydrat(en) oder Siliziumhydroxid, so liegt die Schichtdicke bevorzugt in einem Bereich von 3 bis 60 nm und besonders bevorzugt von 10 bis 50 nm.

Bei weiter bevorzugten Ausführungsformen können die SiO₂-Schichten an der Oberfläche mit organofunktionellen Haftverbindungen wie beispielsweise Silanen, Titanaten, Zirkonaten oder Aluminaten beschichtet sein.

Durch Verwendung von hydrophoben organofunktionellen Verbindungen wie beispielsweise Alkylsilanen, Arylsilanen und/oder fluorierten Alkylsilanen kann die korrosionshemmende Wirkung noch verstärkt werden.

Wenn die korrosionshemmende Beschichtung aus einer Chromatierschicht besteht oder eine solche umfasst, so liegt deren Schichtdicke bevorzugt in einem Bereich von 3 bis 50 nm und besonders bevorzugt von 10 bis 30 nm.

Chromatierschichten werden erhalten durch Behandlung von Aluminiumpigmenten mit Chromsäure in organischen Lösungsmitteln. Es bilden sich Mischschichten aus Chromoxid und dem Oxid des Aluminiumsubstrats aus, die eine sehr hohe Korrosionsbeständigkeit aufweisen.

Bei anderen bevorzugten Ausführungsformen werden die Pigmente mit einem Aluminiumanteil von wenigstens 30 Gew.-% mit einer korrosionshemmenden Beschichtung umfassend oder bestehend aus korrosionsschützenden Additiven belegt. Derartige Additivschichten sind in der Regel nicht miteinander vernetzt, können jedoch in manchen Fällen, bei denen die Hartschaumplatten nicht zu aggressiven Bedingungen ausgesetzt werden, einen bereits ausreichenden Korrosionsschutz bieten.

Bevorzugte Beispiele für derartige Additive sind organische phosphorhaltige Verbindungen und insbesondere bevorzugt Phosphonsäuren oder deren Ester, organische Phosphorsäuren oder deren Ester, organische Phosphinsäuren oder deren Ester, wobei die organischen Phosphon-, Phosphor- oder Phosphinsäuren/ester bevorzugt mindestens einen organischen Rest mit 6 bis 30 und weiter bevorzugt 12 bis 24 C-Atomen aufweisen.

Bevorzugt sind phosphorhaltige Verbindungen mit der allgemeinen Formel (I)

R¹R²p(O)(OR³) (I)

und/oder der allgemeinen Formel (II)

R¹P(O)(OR³)(OR⁴) (II),

wobei R¹ und R² unabhängig voneinander ein organischer Rest mit 6 bis 30 C-Atomen sind, und R³ und R⁴ unabhängig voneinander H oder Alkyl mit 1 bis 10 C-Atomen sind.

Verbindungen der allgemeinen Formel (I) sind organische Derivate von phosphiniger Säure, sogenannte organische phosphinige Säure, bei der die organischen Reste R¹ und R² direkt an das Phosphoratom gebunden sind. Wenn der Rest R³ Alkyl mit 1 bis 10 C-Atomen ist, handelt es sich das organische Derivat eines Esters von phosphiniger Säure. Wenn R³ Wasserstoff ist, handelt es sich um ein organisches Derivat der freien phosphinigen Säure.

Verbindungen der allgemeinen Formel (II) sind organische Derivate von Phosphonsäure, sogenannte organische Phosphonsäure, bei der der organische Rest R¹ direkt an das Phosphoratom gebunden ist. Wenn die Reste R³ und R⁴ Alkyl mit 1 bis 10 C-Atomen sind, handelt es sich um ein organisches Derivat eines Diesters von Phosphonsäure. Wenn R³ Wasserstoff und R⁴ Alkyl mit 1 bis 10 C-Atomen ist, handelt es sich um ein organisches Derivat eines Monoesters von Phosphonsäure. Wenn R³ und R⁴ Wasserstoff sind, handelt es sich um ein organisches Derivat der freien Phosphonsäure.

Gemäß einer weiteren bevorzugten Variante können als korrosionsschützendes Additiv Verbindungen der Formel (IIIa) oder (IIIb) verwendet werden.

(R¹O)(R²O)P(O)(OR³) (IIIa)

oder

(R¹O)(R²O)(R⁴O)(R⁵O)P(OR³) (IIIa)

Verbindungen der allgemeinen Formel (IIIa) und (IIIb) sind organische Derivate von Phosphorsäure, sogenannte Phosphorsäureester, wobei die organischen Reste R¹, R², R³ und, sofern vorhanden, R⁴ und R⁵ über ein Sauerstoffatom an das Phosphoratom gebunden sind. Die Reste R¹ bis R⁵ sind vorzugsweise Alkyl und weisen unabhängig voneinander 1 bis 10 C-Atome auf. Wenn die Reste R¹ bis R⁵ Wasserstoff sind, handelt es sich um freien Phosphorsäure.

Besonders bevorzugte phorphorhaltige Additive sind Phosphonsäuren der Formeln (I) und/oder (II).

Je nach Pigmentzusammensetzung liegt die mittlere Schichtdicke der Additivbeschichtung vorzugsweise in einem Bereich zwischen 0,5 nm bis 10 nm, bevorzugt zwischen 0,6 bis 5 nm und besonders bevorzugt von 0,7 nm bis 2 nm.

Bei weiteren Ausführungsformen enthält der erfindungsgemäße Polystyrol-Hartschaum neben den nicht-plättchenförmigen Pigmenten mit einem Aluminiumanteil von wenigstens 30 Gew.-% ein oder mehrere weitere athermane Pigmente. Unter athermanen Pigmenten werden hierbei Pigmente verstanden, die IR-Strahlung absorbieren und/oder reflektieren und/oder streuen können.

Bevorzugt werden als weitere IR-aktive Pigmente Graphit, Ruß und/oder organische Farbstoffe verwendet.

Die der vorliegenden Erfindung zugrundeliegende Aufgabe wird des weiteren durch Bereitstellung eines Verfahrens gemäß Anspruch 6 zur Herstellung von Polystyrol-Hartschaum gelöst, wobei das Verfahren folgenden Schritt umfasst: Verschäumen eines Materials auf Basis von Styrolpolymer und/oder Styrolcopolymer sowie Treibmittel und welches korrosionshemmend-beschichtete nicht-plättchenförmige Pigmente mit einem Aluminiumanteil von wenigstens 30 Gew.-%, bezogen auf das Gesamtgewicht des Pigmentes, aufweist unter Erhalt von expandiertem oder extrudierten Polystyrol-Hartschaum.

Bevorzugte Varianten des erfindungsgemäßen Verfahrens sind in den Unteransprüchen 7 bis 10 angegeben.

Eine bevorzugte Variante des erfindungsgemäßen Verfahrens zur Herstellung von expandierten- Polystyrol-Hartschaum umfasst folgende Schritte:
(a1) Einbringen von korrosionshemmend-beschichteten nicht-plättchenförmigen Pigmenten mit einem Aluminiumanteil von wenigstens 30 Gew.-%, bezogen auf das Gesamtgewicht des Pigmentes, in eine Treibmittel-haltige Styrolpolymer- und/oder Styrolcopolymerschmelze, oder
(a2) Einbringen von korrosionshemmend-beschichteten nichtplättchenförmigen Pigmenten mit einem Aluminiumanteil von wenigstens 30 Gew.-%, bezogen auf das Gesamtgewicht des Pigmentes, in Styrolpolymer und/oder Styrolcopolymer und nachfolgendem Schmelzen des Styrolpolymers und/oder Styrolcopolymers in Gegenwart oder unter nachfolgender Zugabe von Treibmittel,
(b) Extrudieren der Schmelze unter Erhalt eines Granulats,
(c) Verschäumen des in Schritt (b) erhaltenen Granulats unter Erhalt eines Polystyrol-Hartschaumes.

Wird in diesem Verfahren das Extrudieren bei Schritt (b) in ein Wasserbad unter Druck durchgeführt, so handelt es sich um eine Unterwassergranulation.

Eine weitere bevorzugte Variante des erfindungsgemäßen Verfahrens zur Herstellung des erfindungsgemäßen expandiertem Polystyrol-Hartschaum umfasst folgende Schritte:
(a) Polymerisieren von Styrol, optional mit Comonomeren, in Gegenwart von korrosionshemmend-beschichteten nicht-plättchenförmigen Pigmenten mit einem Aluminiumanteil von wenigstens 30 Gew.-%, bezogen auf das Gesamtgewicht der Pigmente, unter Zugabe eines Treibmittels vor, während und/oder nach der Polymerisation unter Erhalt eines Granulats,
(b) Verschäumen des in Schritt (a) erhaltenen Granulats unter Erhalt von Polystyrol-Hartschaum.

Der Schritt des Aufschäumens kann bei sämtlichen Verfahrensvarianten zur Herstellung von expandiertem Polystyrol-Hartschaum mittels organischer Lösemittel und/oder Wasserdampf durchgeführt werden. Aus Kostengründen und aufgrund erhöhter Umweltfreundlichkeit ist jedoch hierbei Wasserdampf besonders bevorzugt. Aufgrund der erfindungsgemäß aufzubringenden korrosionshemmenden Beschichtung tritt bei den korrosionsanfälligen aluminiumhaltigen Pigmente auch nach dem Aufschäumungsschritt keine wesentliche, vorzugsweise keine, Korrosion auf. Mithin bleibt das IR-Reflexionsvermögen der aluminiumhaltigen Metallpigmente erhalten.

Eine weitere bevorzugte Variante des erfindungsgemäßen Verfahrens zur Herstellung von extrudiertem Polystyrol-Hartschaum nach umfasst folgende Schritte:
(a1) Schmelzen eines Gemenges von treibmittelfreiem Polystyrol- und/oder Polystyrolcopolymer-Granulat und von korrosionshemmend-beschichteten nicht-plättchenförmigen Pigmenten mit einem Aluminiumanteil von wenigstens 30 Gew.-%, bezogen auf das Gesamtgewicht der Pigmente, in einem Extruder in Gegenwart und/oder unter Zugabe von Treibmittel, oder
(a2) Schmelzen eines Polystyrol- und/oder Polystyrolcopolymer-Granulats, in welches korrosionshemmend-beschichtete nicht-plättchenförmigen Pigmenten mit einem Aluminiumanteil von wenigstens 30 Gew.-%, bezogen auf das Gesamtgewicht der Pigmente, eingebettet sind in einem Extruder in Gegenwart und/oder unter Zugabe von Treibmittel
(b) Extrudieren und Aufschäumen der Schmelze aus Schritt (a) unter Erhalt von Polystyrol-Hartschaum.

Im Unterschied zu den Verfahren der Herstellung von expandiertem Polystyrol-Hartschaum wird für das Aufschäumen von extrudiertem Polystyrol-Hartschaum kein weiteres Schäumungsmittel benötigt.

Bei sämtlichen Verfahrensvarianten zur Herstellung von expandiertem oder extrudiertem Polystyol-Hartschaum wird als Treibmittel vorzugsweise Kohlendioxid oder Pentan verwendet.

Die erfindungsgemäß vorzugsweise zu verwendenden nicht-plättchenförmigen Metallpigmente mit einem Aluminiumanteil von wenigsten 30 Gew.-%, bezogen auf das Gesamtgewicht der Pigmente, können durch die folgenden Verfahrensvarianten (A) oder (B) erhalten werden:
Verfahrensvariante (A):
   a1) Herstellen nicht-plättchenförmiger Metallpigmente mit einer mittleren Größe im Bereich von 1 µm bis 75 µm, durch Verdüsung einer Metallschmelze,
   b) Beschichten der nicht-plättchenförmigen Metallpigmente mit einer korrosionshemmenden Beschichtung
   oder
Verfahrensvariante (B):
   a2) Zersprengen oder Explodieren lassen von Metalldraht unter Erhalt von Metallpigmenten mit einer mittleren Größe im Bereich von 30 nm bis unter 1 µm,
   b) Beschichten der Metallpigmente mit einer korrosionshemmenden Beschichtung.

Die vorstehenden Verfahrensvarianten (A) oder (B) zur Herstellung der mit einer korrosionshemmenden Beschichtung versehenen Metallpigmente können auch unmittelbar mit dem erfindungsgemäßen Verfahren verbunden werden, indem diese Schritte vorgeschaltet werden.

Bei einer bevorzugten Ausführungsform werden die nicht-plättchenförmigen Metallpigmente durch Verdüsung einer Metallschmelze hergestellt. Danach schließt sich bevorzugt ein Klassierverfahren an. Die so erhaltenen Metallpigmente können bei sämtlichen Verfahrensvarianten eingesetzt werden. Die Verfahrensvariante (A), vorzugsweise mit nachfolgender Größenklassierung, ist besonders geeignet zur Herstellung von nicht-plättchenförmigen Metallpigmenten im Größenbereich von 1 bis 75 µm und besonders bevorzugt 2 bis 35 µm.

Die erfindungsgemäß gemäß Anspruch 12 verwendeten Pigmente mit einem Aluminiumanteil von wenigstens 30 Gew.-% sind mit einer korrosionshemmenden Beschichtung versehenen Metallpigmente, wobei die Metallpigmente gemäß den beiden vorstehend angegebenen Verfahrensvarianten (A) und (B) hergestellt werden können. Vorzugsweise weisen die Metallpigmente, bezogen auf den Metallanteil, einen Gehalt von wenigstens 50 Gew.-% Aluminium auf. Äußerst bevorzugt beträgt der Aluminiumanteil wenigstens 90 Gew.-%, noch weiter bevorzugt wenigstens 98 Gew.-%, jeweils bezogen auf den Metallanteil der bevorzugt verwendeten Metallpigmente.

Bei der Herstellung expandierbarer, nicht-plättchenförmiger aluminiumpigmenthaltiger Styrolpolymeren-Granulate im sogenannten Extrusionsverfahren kann von einer treibmittelhaltigen Styrolpolymerschmelze ausgegangen werden, die aus dem Aufschmelzen treibmittelhaltiger PolystyrolGranulate resultiert. In diesem Fall kann eine Zugabe weiterer Treibmittel entfallen. Alternativ ist es auch möglich, ein treibmittelfreies Polystyrol-Granulat aufzuschmelzen, dem, um expandierbare Styrolpolymeren-Granulaten zu erhalten, ein Treibmittel zugesetzt werden muss.

Neben den beschichteten nicht-plättchenförmigen Aluminiumpigmente können weitere Zusatz- und Hilfsstoffe in die expandierbaren Styrolpolymeren-Granulate zugegeben werden. Beispielsweise können die Zusatz- und Hilfsstoffe direkt der Styrolpolymerschmelze zugegeben werden oder mittels in Wasser löslicher, emulgierbarer oder suspendierbarer Beschichtungsmittel im Wasserkreislauf eines Unterwassergranulators auf die expandierbaren Styrolpolymer-Granulate aufgebracht werden. Gebräuchliche Zusatz- und Hilfsstoffe sind Keimbildner, Weichmacher, Flammschutzmittel, Flammschutzsynergisten, Hydrophobierungsmittel, lösliche und unlösliche anorganische und/oder organische Farbstoffe und Pigmente. Bevorzugt wird die Beschichtung im Wasserkreislauf des Unterwassergranulators für die Hydrophobierung verwendet.

Die Herstellung des expandierbaren Polystyrol- und/oder Polystyrolcopolymergranulats kann mittels Suspensionspolymerisation erfolgen. Bei der Suspensionspolymerisation können übliche Hilfs- und Zusatzstoffe zugesetzt werden.

Neben den bereits genannten Stoffen kommen vor allem solche Stoffe in Betracht, die für die Reaktionsführung der Polymerisation von Bedeutung sind, wie bspw. Peroxid-Initiatoren, Suspensionsstabilisatoren, Kettenüberträger und dergleichen. Als Ergebnis der Suspensionspolymerisation entsteht perlförmiges, im Wesentlichen rundes expandierbares Styrolpolymer-Granulat, das die beschichteten nicht-plättchenförmigen Aluminiumpigmente, Treibmittel und ggf. weiter zugesetzte Hilfs- und Zusatzstoffe enthält. Dieses Granulat kann beim Verschäumen direkt eingesetzt werden.

Die Zugabe der Zusatz- und Hilfsstoffe neben den beschichteten nichtplättchenförmigen Aluminiumpigmenten und dem Treibmittel in die treibmittelfreie Polystyrolschmelze kann in dem erfindungsgemäßen Verfahren zur Bereitstellung eines extrudierten Polystyrol-Hartschaumes erfolgen.

Das Aufschäumen des expandierbaren Styrolpolymeren-Granulats unter Bereitstellung eines expandierten Polystyrol-Hartschaumes erfolgt bei sämtlichen Verfahrensvarianten in an sich bekannter Weise unter Verwendung von Wasserdampf, vorzugsweise nach dem Blockschäum-, Plattenschäum- oder Bandschäumverfahren.

Der expandierte Polystyrol-Hartschaum (EPS) oder der extrudrierte Polystyrol-Hartschaum (XPS) liegt vorzugsweise als Formkörper, vorzugsweise in Block- oder Plattenform, vor.

Bei einer anderen Ausführungsform der Erfindung kann der Polystyrol-Hartschaum sowohl die nicht plättchenförmigen Pigmente mit einem Aluminiumanteil von wenigstens 30 Gew.-%, bevorzugt überwiegend zylindrische aluminiumhaitige Pigmente mit der Wirkung als Nanoantenne, und zusätzlich weitere IR-aktive Pigmente aufweisen. Diese weiteren Pigmente können Pigmente mit überwiegend IR-absorbierenden Eigenschaften, wie beispielsweise Graphit, Ruß und/oder organische Farbstoffe, oder solche mit überwiegend IR-reflektierenden Eigenschaften, wie Metalle und/oder Metalloxide, sein.

Der erfindungsgemäße Polystyrol-Hartschaum kann für die Dämmung in Gewerken, insbesondere für Fassaden, Dächern und Böden, in an sich bekannter Art verwendet werden.

Die der Erfindung zugrundeliegende Aufgabe wird auch durch die Verwendung von korrosionshemmend-beschichteten nicht-plättchenförmigen Pigmenten, die einen Aluminiumanteil von wenigstens 30 Gew.-%, bezogen auf das Gesamtgewicht der nicht-plättchenförmigen Pigmente, aufweisen, als athermanes Material in Polystyrol-Hartschaum gelöst.

Die folgenden Beispiele erläutern die Erfindung näher ohne sie jedoch zu beschränken.

### Vergleichsbeispiel 1: Herstellung eines Aluminiumgrießes durch Verdüsung

In einem Induktionstiegelofen (Fa. Induga) wurden Aluminiumbarren kontinuierlich eingebracht und aufgeschmolzen. Im sogenannten Vorherd lag die Aluminiumschmelze bei einer Temperatur von etwa 700 °C flüssig vor. Mehrere Düsen, die nach einem Injektorprinzip arbeiten, tauchten in die Schmelze ein und verdüsten die Aluminiumschmelze vertikal nach oben. Das Verdüsungsgas wurde in Kompressoren (Fa. Kaeser) bis auf 20 bar verdichtet und in Gaserhitzern bis auf etwa 690 °C erhitzt. Der entstehende Aluminiumgrieß erstarrte und erkaltete im Fluge. Der Induktionsofen war in eine geschlossene Anlage integriert. Die Verdüsung erfolgte unter Inertgas (Stickstoff). Die Abscheidung des Aluminiumgrieß erfolgte zuerst in einem Zyklon, wobei der dort abgeschiedene pulverförmige Aluminiumgrieß einen d₅₀ von 14-17 µm aufwies. Zur weiteren Abscheidung diente in Folge ein Multizyklon , wobei der in diesem abgeschiedene pulverförmige Aluminiumgrieß einen d₅₀ von 2,5 µm aufwies. Die Aluminiumpigmente hatten eine leicht ellipsoide Form.

### Beispiel 1: Beschichtung der im Vergleichsbeispiel 1 hergestellten Aluminiumpigmente mit SiO₂

100 g des Aluminiumgrießes aus dem Vergleichsbeispiel 1 wurden in 300 ml Isopropanol suspendiert und auf Siedetemperatur gebracht. Unter Rühren wurde eine Lösung von 0,7 g Ethylendiamin in 5 g H₂O hinzugegeben. Danach leitete man über einen Zeitraum von 2h 18 g Tetraethoxysilan und 25 g Isopropanol mit einer Dosierpumpe (Ismatec) kontinuierlich ein. Anschließend ließ man die Suspension noch 6 h lang weiter reagieren. Das Gemisch wurde über Nacht bei Raumtemperatur gerührt und am nächsten Tag abgenutscht. Der Pigmentfilterkuchen wurde anschließend bei 80°C unter Vakuum getrocknet.

Das Pigment hatte einen SiO₂- Gehalt von 5 Gew.-%.

Der Prozess wurde so oft wiederholt, bis die erforderliche Menge an beschichtetem Aluminiumpigmenten für die Herstellung der Wärmedämmplatte erhalten wurde.

### Beispiel 2: Chromatierung der im Vergleichsbeispiel 1 hergestellten Aluminiumpigmente

100 g des Aluminiumgrießes aus dem Vergleichsbeispiel 1 wurden mit 20 g Testbenzin angepastet. 18 g einer Chromsäurelösung wurden hergestellt, indem man 2,3 g CrO₃ in 8 g Wasser (vollentsalzt) auflöst.

In einem 1 L-Reaktor wurden 200 g Wasser (vollentsalzt) auf 90°C aufgeheizt. Unter heftigem Rühren gab man zunächst 10 g Butylglykol und anschließend Aluminiumpigmentpaste hinzu. Wenige Minuten später erfolgte die Zugabe der Chromsäurelösung bei einer Reaktionstemperatur von 80°C. Man ließ unter starkem Rühren das Gemisch weitere 50 min lang reagieren. Dann ließ man 30 min lang abkühlen und dekantierte in einem Becherglas das Reaktionsgemisch mehrmals mit je 100 ml einer 5%-igen H₂O/Butylglykol-Lsg. bis keine Gelbfärbung der überstehenden Lösung mehr auftrat. Anschließend wurde das Produkt auf einer Nutsche abfiltriert und mit viel Wasser (ca. 1 L) gewaschen. Der Prozess wurde so oft wiederholt, bis die erforderliche Menge an beschichtetem Aluminiumpigmenten für die Herstellung der Wärmedämmplatte erhalten wurde.

### Vergleichsbeispiel 2: (in Anlehnung an die WO2004/112997)

Ein Reaktionsbehälter aus Glas analog der in der WO 2004/112997 beschriebenen Reaktoren für die Zubereitung von Nanomaterialien, wurde mit einer Vorrichtung zur Befestigung einer Aluminiummetallplatte (Elektrode 2) senkrecht zur Basis des Reaktors versehen. Eine Vorrichtung zur Führung eines Drahtes wurde angebracht, damit sich ein Aluminiumdraht (Elektrode 2', Dicke: 300 µm) der Platte entlang ihrer Normalen nähert, während dieser durch die Leitvorrichtung geschoben wird. Die Metallplatte und der Draht bildeten zwei Elektroden, die an eine Batteriebank angeschlossen wurden. Die Batteriebank ermöglicht die Bereitstellung von Spannungen, welche bei 12 V beginnen und in Schritten von 12 V bis zu 48 V ansteigen können. Der Behälter des Reaktors wurde mit Butanol gefüllt, bis die Elektrode 2 vollständig und 66% der Elektrode 2 eingetaucht waren.

Die Batterien wurden so angeschlossen, dass Elektrode 1 mit dem Plus-Pol der Batterie und Elektrode 2 mit dem den Minus-Pol verbunden wurde.

Die Elektrode 2 wurde nun mit Elektrode 1 verbunden, um eine Explosion zu erzielen, nach der der Strom ganz natürlich auf null fällt. Dieses signalisierte den Anfang einer neuen Reihe von Explosionen, wodurch der Prozess wiederholt wurde.

Die explodierten Metallteilchen verblieben im dichten Medium suspendiert und wurden von der Flüssigkeit mittels einer Zentrifuge bei 5000 U/ abgetrennt.

Mittels Lichtstreuung wurden Teilchen mit leicht elliptischer Form und einer mittleren Größe von ca. 600 nm nachgewiesen.

Der Prozess wurde so oft wiederholt, bis die erforderliche Menge an beschichtetem Aluminiumpigmenten für die Herstellung der Wärmedämmplatte erhalten wurde.

### Beispiel 3: Beschichtung der im Vergleichsbeispiel 2 hergestellten Aluminiumpigmente mit SiO2

100 g des Aluminiumgrießes aus dem Vergleichsbeispiel 2 wurden in 1.200 ml Isopropanol suspendiert und auf Siedetemperatur gebracht. Unter Rühren wurde eine Lösung von 2,8 g Ethylendiamin in 20 g H₂O hinzugegeben. Danach leitete man über einen Zeitraum von 2h 72 g Tetraethoxysilan und 100 g Isopropanol mit einer Dosierpumpe (Ismatec) kontinuierlich ein. Anschließend ließ man die Suspension noch 6 h lang weiter reagieren. Das Gemisch wurde über Nacht bei Raumtemperatur gerührt und am nächsten Tag abgenutscht. Der Pigmentfilterkuchen wurde anschließend bei 80°C unter Vakuum getrocknet.

Das Pigment hatte einen SiO₂- Gehalt von 5 Gew.-%.

Der Prozess wurde so oft wiederholt, bis die erforderliche Menge an beschichtetem Aluminiumpigmenten für die Herstellung der Wärmedämmplatte erhalten wurde.

### Beispiel 4: Chromatierung der im Vergleichsbeispiel 2 hergestellten Aluminiumpigmente

100 g des Aluminiumgrießes aus dem Vergleichsbeispiel 1 wurden mit 20 g Testbenzin angepastet. 72 g einer Chromsäurelösung wurden hergestellt, indem man 9,2 g CrO₃ in 32 g Wasser (vollentsalzt) auflöst.

In einem 1 L-Reaktor wurden 200 g Wasser (vollentsalzt) auf 90°C aufgeheizt. Unter heftigem Rühren gab man zunächst 10 g Butylglykol und anschließend Aluminiumpigmentpaste hinzu. Wenige Minuten später erfolgte die Zugabe der Chromsäurelösung bei einer Reaktionstemperatur von 80°C. Man ließ unter starkem Rühren das Gemisch weitere 50 min lang reagieren. Dann ließ man 30 min lang abkühlen und dekantierte in einem Becherglas das Reaktionsgemisch mehrmals mit je 100 ml einer 5%igen VE-H₂O/Butylglykol-Lsg. bis keine Gelbfärbung der überstehenden Lösung mehr auftrat. Anschließend wurde das Produkt auf einer Nutsche abfiltriert und mit viel Wasser (ca. 1 L) gewaschen. Der Prozess wurde so oft wiederholt, bis die erforderliche Menge an beschichtetem Aluminiumpigmenten für die Herstellung der Wärmedämmplatte erhalten wurde.

### Herstellung der Wärmedämmplatten

In einem Einschneckenextruder mit einer nachgeschalteten Unterwassergranulation wurde bei einer Temperatur von 180°C eine treibmittelhaltige aus PS 158 K (Hersteller BASF SE) mit einem Treibmittelgehalt von 6 Gew.-% Pentan aufgeschmolzen. Der treibmittelhaltigen Polystyrolschmelze wurden jeweils 4 Gew.-% den nach den beschriebenen Verfahren hergestellten Pigmente (Vergleichsbeispiele 1 und 2, Beispiele 1-4) mittels eines statischen Mischers eingemischt. Die treibmittel- und pigmenthaltige Styrolpolymerschmelze wurde anschließend auf eine Temperatur von etwa 150 °C abgekühlt und durch eine auf 200 °C beheizte Düsenplatte mit 0,4 mm Bohrungen in ein Wasserbad bei 3 bar granuliert. Die erhaltenen pigmentierten Polystyrolgranulate besaßen einen Granulatdurchmesser von etwa 0,75 mm.

Die pigmentierten Polystyrolgranulate wurden dann in bekannter Art und Weise in einem Blockschäumverfahren mit Wasserdampf bei einer Temperatur von 115 °C während 3 min zu Blöcken mit einer Rohdichte von 15 kg/m³ und einem Pigmentanteil von 4 Gew.-% verschäumt, aus denen Platten mit einer Dimension von 1000 mm x 500 mm x 50 mm geschnitten wurden. An diesen Platten wurden Messungen der Wärmeleitfähigkeit nach den Vorgaben der DIN EN 12 667 vorgenommen.

Die Ergebnisse sind in folgender Tabelle zusammengestellt:

| Produkt: Rohdichte 15 kg/m³, Pigmentgehalt 4 Gew.-% | Messwert der Wärmeleitfähigkeit W/(m·K) |
|---|---|
| Pigment: Vergleichsbeispiel 1 | 0,030 |
| Pigment: Beispiel 1 | 0,0280 |
| Pigment: Beispiel 2 | 0,0285 |
| Pigment: Vergleichsbeispiel 2 | 0,034 |
| Pigment: Beispiel 3 | 0,0270 |
| Pigment: Beispiel 4 | 0,0276 |

Die Ergebnisse zeigen den positiven Effekte der Beschichtung der Pigmente auf die wärmedämmenden Eigenschaften hinsichtlich der IR-Komponente, indem bei gleichen Pigmentgehalten eine Verbesserung der Wärmeleitfähigkeit gegenüber dem unbeschichteten Vergleichsbeispiel um etwa 6 - 7 % erreichbar ist.

Dies war wahrscheinlich vor allem auf die verbesserte Korrosionsbeständigkeit der Pigmente gegenüber dem Wasserdampf zurückzuführen. Die unbeschichteten Aluminiumpigmente der Vergleichsbeispiele wiesen viel höhere Wärmeleitfähigkeiten auf, was offenbar auf Oxidation der Teilchen zurückzuführen ist. Besonders schnell wurden hierbei die sehr kleinen Partikel aus Vergleichsbeispiel 2 oxidiert. Hier wurde eine typische Wärmeleitfähigkeit erhalten, wie sie auch ohne Zusatz von Aluminiumpigmenten gemessen wird. Die vergleichsweise besten Ergebnisse wurden für SiO₂ beschichtete Aluminiumpigmente (Beispiele 1 und 3) erhalten. Offenbar ist diese Beschichtung besonders geeignet, um die Korrosionsstabilität der Pigmente gegenüber dem Wasserdampf zu gewährleisten.

## Patentansprüche

1. Polystyrol-Hartschaum, enthaltend nicht-plättchenförmige Pigmente, die einen Aluminiumanteil von wenigstens 30 Gew.-%, bezogen auf das Gesamtgewicht der nicht-plättchenförmigen Pigmente, aufweisen,
**dadurch gekennzeichnet,**
**dass** die Pigmente einen mit Lasergranulometrie bestimmten mittleren Durchmesser aus einem Bereich von 30 nm bis 6 µm sowie wenigstens
eine korrosionshemmende Beschichtung aufweisen und wobei die korrosionshemmende Beschichtung Verbindungen, die aus der Gruppe, die aus Siliziumoxid, vorzugsweise SiO₂, Siliziumoxidhydrat(en), Siliziumhydroxid, Chromatierschichten und Mischungen davon besteht, ausgewählt werden, enthält oder daraus besteht, wobei die korrosionshemmende Beschichtung eine mittlere Schichtdicke von 2 nm bis 100 nm aufweist und wobei der Anteil der nicht-plättchenförmigen Pigmente in einem Bereich von 0,1 bis 10 Gew.-%, bezogen auf das Gesamtgewicht des Polystyrol-Hartschaumes, beträgt.

2. Polystyrol-Hartschaum gemäß Anspruch 1,
**dadurch gekennzeichnet,**
**dass** der Polystyrol-Hartschaum ein expandierter Polystyrol-Hartschaum (EPS) oder ein extrudierter Polystyrol-Hartschaum (XPS) ist.

3. Polystyrol-Hartschaum gemäß einem der Ansprüche 1 oder 2,
**dadurch gekennzeichnet,**
**dass** die nicht-plättchenförmigen Pigmente einen mittleren Durchmesser aus einem Bereich von 30 nm bis unter 1 µm aufweisen.

4. Polystyrol-Hartschaum gemäß Anspruch 3,
**dadurch gekennzeichnet,**
**dass** die nicht-plättchenförmigen Pigmente im Wesentlichen zylinderförmig, stäbchenförmig oder nadelförmig sind.

5. Polystyrol-Hartschaum gemäß einem der Ansprüche 1 bis 4,
**dadurch gekennzeichnet,**
**dass** die korrosionshemmende Beschichtung korrosionsschützende Additive umfasst oder daraus besteht.

6. Verfahren zur Herstellung von Polystyrol-Hartschaum nach einem der vorstehenden Ansprüche,
**dadurch gekennzeichnet,**
**dass** das Verfahren folgenden Schritt umfasst:
Verschäumen eines Materials auf Basis von Styrolpolymer und/oder Styrolcopolymer, Treibmittel und korrosionshemmend-beschichteten nicht-plättchenförmigen Pigmenten mit einem Aluminiumanteil von wenigstens 30 Gew.-%, bezogen auf das Gesamtgewicht des Pigmentes, unter Erhalt von expandiertem oder extrudiertem Polystyrol-Hartschaum.

7. Verfahren zur Herstellung von Polystyrol-Hartschaum nach Anspruch 6,
**dadurch gekennzeichnet,**
**dass** das Verfahren folgende Schritte umfasst:
(a1) Einbringen von korrosionshemmend-beschichteten nicht-plättchenförmigen Pigmenten mit einem Aluminiumanteil von wenigstens 30 Gew.-%, bezogen auf das Gesamtgewicht des Pigmentes, in eine Treibmittel-haltige Styrolpolymer- und/oder Styrolcopolymerschmelze,
oder
(a2) Einbringen von korrosionshemmend-beschichteten nicht-plättchenförmigen Pigmenten mit einem Aluminiumanteil von wenigstens 30 Gew.-%, bezogen auf das Gesamtgewicht des Pigmentes, in Styrolpolymer und/oder Styrolcopolymer und nachfolgendem Schmelzen des Styrolpolymers und/oder Styrolcopolymers in Gegenwart oder unter nachfolgender Zugabe von Treibmittel,
(b) Extrudieren der Schmelze unter Erhalt eines Granulats,
(c) Verschäumen des in Schritt (b) erhaltenen Granulats unter Erhalt eines Polystyrol-Hartschaumes.

8. Verfahren zur Herstellung von expandiertem Polystyrol-Hartschaum nach Anspruch 6,
**dadurch gekennzeichnet;**
**dass** das Verfahren folgende Schritte umfasst:
(a) Polymerisieren von Styrol, optional mit Comonomeren, in Gegenwart von korrosionshemmend-beschichteten nicht-plättchenförmigen Pigmenten mit einem Aluminiumanteil von wenigstens 30 Gew.-%, bezogen auf das Gesamtgewicht der Pigmente, unter Zugabe eines Treibmittels vor, während und/oder nach der Polymerisation unter Erhalt eines Granulats,
(b) Verschäumen des in Schritt (a) erhaltenen Granulats unter Erhalt von Polystyrol-Hartschaum.

9. Verfahren zur Herstellung von extrudiertem Polystyrol-Hartschaum nach Anspruch 6,
**dadurch gekennzeichnet,**
**dass** das Verfahren folgende Schritte umfasst:
(a1) Schmelzen eines Gemenges von treibmittelfreiem Polystyrol- und/oder Polystyrolcopolymer-Granulat und von korrosionshemmend-beschichteten nicht-plättchenförmigen Pigmenten mit einem Aluminiumanteil von wenigstens 30 Gew.-%, bezogen auf das Gesamtgewicht der Pigmente, in einem Extruder in Gegenwart und/oder unter Zugabe von Treibmittel, oder
(a2) Schmelzen eines Polystyrol- und/oder Polystyrolcopolymer-Granulats, in welches korrosionshemmend-beschichtete nichtplättchenförmige Pigmente mit einem Aluminiumanteil von wenigstens 30 Gew.-%, bezogen auf das Gesamtgewicht der Pigmente, eingebettet sind, in einem Extruder in Gegenwart und/oder unter Zugabe von Treibmittel
(b) Extrudieren und Aufschäumen der Schmelze unter Erhalt von Polystyrol-Hartschaum.

10. Verfahren nach einem der Ansprüche 6 bis 9,
**dadurch gekennzeichnet,**
**dass** das Treibmittel Kohlendioxid oder Pentan ist.

11. Verwendung des Polystyrol-Hartschaums nach einem der Ansprüche 1 bis 5 als Dämmmaterial, insbesondere für Fassaden, Dächer oder Böden.

12. Verwendung von korrosionshemmend-beschichteten nicht-plättchenförmigen Pigmenten, die einen Aluminiumanteil von wenigstens 30 Gew.-%, bezogen auf das Gesamtgewicht der nicht-plättchenförmigen Pigmente, aufweisen, als athermanes Material in Polystyrol-Hartschaum, wobei die korrosionshemmende Beschichtung Verbindungen, die aus der Gruppe, die aus Siliziumoxid, vorzugsweise SiO₂, Siliziumoxidhydrat(en), Siliziumhydroxid, Chromatierschichten und Mischungen davon besteht, ausgewählt werden, enthält oder daraus besteht, wobei die Korrosionshemmende Beschichtung eine mittlere Schichtdicke von 2 nm bis 100 nm aufweist.

## Claims

1. Polystyrene rigid foam comprising non-platelet-shaped pigments containing aluminium in a proportion of at least 30 % by weight,based on the total weight of the non-platelet-shaped pigments,
**characterised in that**
the pigments have a mean diameter within a range of 30 nm to 6 µm as determined by laser granulometry and have at least one corrosion-inhibiting coating, and the corrosion-inhibiting coating contains or comprises compounds selected from the group comprising silicon oxide, preferably SiO₂, silicon oxide hydrate(s), silicon hydroxide, chromate coatings and mixtures thereof, and the corrosion-inhibiting coating has a mean coating thickness of 2nm to 100 nm, and the proportion of non-platelet-shaped pigments is within a range of 0.1 to 10 % by weight based on the total weight of the polystyrene rigid foam.

2. Polystyrene rigid foam as claimed in claim 1,
**characterised in that**
the polystyrene rigid foam is an expanded polystyrene rigid foam (EPS) or an extruded polystyrene rigid foam (XPS).

3. Polystyrene rigid foam as claimed in one of claims 1 or 2,
**characterised in that**
the non-platelet-shaped pigments have a mean diameter within a range of 30 nm to less than 1 µm.

4. Polystyrene rigid foam as claimed in claim 3,
**characterised in that**
the non-platelet-shaped pigments are substantially cylindrical in shape, rod-shaped or needle-shaped.

5. Polystyrene rigid foam as claimed in one of claims 1 to 4,
**characterised in that**
the corrosion-inhibiting coating comprises or contains anti-corrosion additives.

6. Method of producing polystyrene rigid foam as claimed in one of the preceding claims,
**characterised in that**
the method comprises the following step:
foaming a material with a base of styrene polymer and/or styrene copolymer, blowing agent and non-platelet-shaped pigments with a corrosion-inhibiting coating and an aluminium content of at least 30 % by weight, based on the total weight of the pigment, to obtain expanded or extruded polystyrene rigid foam.

7. Method of producing polystyrene rigid foam as claimed in claim 6,
**characterised in that**
the method comprises the following steps:
(a1) introducing non-platelet-shaped pigments with a corrosion-inhibiting coating and an aluminium content of at least 30 % by weight, based on the total weight of the pigment, into a styrene polymer and/or styrene copolymer melt containing blowing agent,
or
(a2) introducing non-platelet-shaped pigments with a corrosion-inhibiting coating and an aluminium content of at least 30 % by weight, based on the total weight of the pigment, into styrene polymer and/or styrene copolymer and then melting the styrene polymer and/or styrene copolymer in the presence of or whilst subsequently adding blowing agent, (b) extruding the melt to obtain a granulate,
(c) foaming the granulate obtained in step (b) to obtain a polystyrene rigid foam.

8. Method of producing expanded polystyrene rigid foam as claimed in claim 6,
**characterised in that**
the method comprises the following steps:
(a) polymerising styrene, optionally with comonomers, in the presence of non-platelet-shaped pigments with a corrosion-inhibiting coating and an aluminium content of at least 30 % by weight, based on the total weight of the pigment, and adding a blowing agent before, during and/or after polymerisation to obtain a granulate,
(b) foaming the granulate obtained in step (a) to obtain polystyrene rigid foam.

9. Method of producing extruded polystyrene rigid foam as claimed in claim 6,
**characterised in that**
the method comprises the following steps:
(a1) melting a quantity of blowing agent-free polystyrene and/or polystyrene copolymer granulate and non-platelet-shaped pigments with a corrosion-inhibiting coating and an aluminium content of at least 30 % by weight, based on the total weight of the pigment, in an extruder in the presence of and/or whilst adding blowing agent or
(a2) melting a polystyrene and/or polystyrene copolymer granulate in which non-platelet-shaped pigments with a corrosion-inhibiting coating and an aluminium content of at least 30 % by weight, based on the total weight of the pigment, are embedded in an extruder in the presence of and/or whilst adding blowing agent,
(b) extruding and foaming the melt to obtain polystyrene rigid foam.

10. Method as claimed in one of claims 6 to 9,
**characterised in that**
the blowing agent is carbon dioxide or pentane.

11. Use of the polystyrene rigid foam as claimed in one of claims 1 to 5 as insulating material, in particular for facades, roofs or floors.

12. Use of non-platelet-shaped pigments with a corrosion-inhibiting coating and an aluminium content of at least 30 % by weight, based on the total weight of the pigment, as athermanous material in polystyrene rigid foam, the corrosion-inhibiting coating containing or comprising compounds selected from the group comprising silicon oxide, preferably SiO₂, silicon oxide hydrate(s), silicon hydroxide, chromate coatings and mixtures thereof, and the corrosion-inhibiting coating has a mean coating thickness of 2 nm to 100 nm.

## Revendications

1. Mousse dure de polystyrène, contenant des pigments non plaquettaires, qui présentent une proportion d'aluminium d'au moins 30 % en poids, par rapport au poids total des pigments non plaquettaires, **caractérisée en ce que** les pigments présentent un diamètre moyen déterminé par granulométrie laser dans une plage allant de 30 nm à 6 µm et comprennent au moins un revêtement anticorrosion, le revêtement anticorrosion contenant des composés choisis dans le groupe constitué par l'oxyde de silicium, de préférence SiO₂, un ou plusieurs oxyhydrates de silicium, l'hydroxyde de silicium, les couches de chromatation et leurs mélanges, ou en étant constitué, le revêtement anticorrosion présentant une épaisseur de couche moyenne de 2 nm à 100 nm, et la proportion des pigments non plaquettaires se situant dans une plage allant de 0,1 à 10 % en poids, par rapport au poids total de la mousse dure de polystyrène.

2. Mousse dure de polystyrène selon la revendication 1, **caractérisée en ce que** la mousse dure de polystyrène est une mousse dure de polystyrène expansée (EPS) ou une mousse dure de polystyrène extrudée (XPS).

3. Mousse dure de polystyrène selon l'une quelconque des revendications 1 ou 2, **caractérisée en ce que** les pigments non plaquettaires présentent un diamètre moyen dans une plage allant de 30 nm à moins de 1 µm.

4. Mousse dure de polystyrène selon la revendication 3, **caractérisée en ce que** les pigments non plaquettaires sont essentiellement cylindriques, en forme de baguette ou aciculaires.

5. Mousse dure de polystyrène selon l'une quelconque des revendications 1 à 4, **caractérisée en ce que** le revêtement anticorrosion comprend des additifs anticorrosion ou en est constitué.

6. Procédé de fabrication d'une mousse dure de polystyrène selon l'une quelconque des revendications précédentes, **caractérisé en ce que** le procédé comprend l'étape suivante :
le moussage d'un matériau à base d'un polymère de styrène et/ou d'un copolymère de styrène, d'un agent gonflant et de pigments non plaquettaires à revêtement anticorrosion ayant une proportion d'aluminium d'au moins 30 % en poids, par rapport au poids total du pigment, pour obtenir une mousse dure de polystyrène expansée ou extrudée.

7. Procédé de fabrication d'une mousse dure de polystyrène selon la revendication 6, **caractérisé en ce que** le procédé comprend les étapes suivantes :
(a1) l'introduction de pigments non plaquettaires à revêtement anticorrosion ayant une proportion d'aluminium d'au moins 30 % en poids, par rapport au poids total du pigment, dans une masse fondue d'un polymère de styrène et/ou d'un copolymère de styrène contenant un agent gonflant,
ou
(a2) l'introduction de pigments non plaquettaires à revêtement anticorrosion ayant une proportion d'aluminium d'au moins 30 % en poids, par rapport au poids total du pigment, dans un polymère de styrène et/ou un copolymère de styrène, puis la fusion du polymère de styrène et/ou du copolymère de styrène en présence ou avec ajout ultérieur d'un agent gonflant,
(b) l'extrusion de la masse fondue pour obtenir un granulat,
(c) le moussage du granulat obtenu à l'étape (b) pour obtenir une mousse dure de polystyrène.

8. Procédé de fabrication d'une mousse dure de polystyrène expansée selon la revendication 6, **caractérisé en ce que** le procédé comprend les étapes suivantes :
(a) la polymérisation de styrène, éventuellement avec des comonomères, en présence de pigments non plaquettaires à revêtement anticorrosion ayant une proportion d'aluminium d'au moins 30 % en poids, par rapport au poids total des pigments, avec ajout d'un agent gonflant avant, pendant et/ou après la polymérisation pour obtenir un granulat,
(b) le moussage du granulat obtenu à l'étape (a) pour obtenir une mousse dure de polystyrène.

9. Procédé de fabrication d'une mousse dure de polystyrène extrudée selon la revendication 6, **caractérisé en ce que** le procédé comprend les étapes suivantes :
(a1) la fusion d'un mélange d'un granulat de polystyrène et/ou d'un copolymère de polystyrène sans agent gonflant et de pigments non plaquettaires à revêtement anticorrosion ayant une proportion d'aluminium d'au moins 30 % en poids, par rapport au poids total des pigments, dans une extrudeuse en présence et/ou avec ajout d'un agent gonflant, ou
(a2) la fusion d'un granulat de polystyrène et/ou d'un copolymère de polystyrène dans lequel des pigments non plaquettaires à revêtement anticorrosion ayant une proportion d'aluminium d'au moins 30 % en poids, par rapport au poids total des pigments, sont incorporés, dans une extrudeuse en présence et/ou avec ajout d'un agent gonflant,
(b) l'extrusion et le moussage de la masse fondue pour obtenir une mousse dure de polystyrène.

10. Procédé selon l'une quelconque des revendications 6 à 9, **caractérisé en ce que** l'agent gonflant est le dioxyde de carbone ou le pentane.

11. Utilisation de la mousse dure de polystyrène selon l'une quelconque des revendications 1 à 5 en tant que matériau isolant, notamment pour façades, toitures ou sols.

12. Utilisation de pigments non plaquettaires à revêtement anticorrosion, qui présentent une proportion d'aluminium d'au moins 30 % en poids, par rapport au poids total des pigments non plaquettaires, en tant que matériau athermane dans une mousse dure de polystyrène, le revêtement anticorrosion contenant des composés choisis dans le groupe constitué par l'oxyde de silicium, de préférence SiO₂, un ou plusieurs oxyhydrates de silicium, l'hydroxyde de silicium, les couches de chromatation et leurs mélanges, ou en étant constitué, le revêtement anticorrosion présentant une épaisseur de couche moyenne de 2 nm à 100 nm.
